# EUROPÄISCHE PATENTANMELDUNG

(11) **EP 2 433 734 A1**
(43) Veröffentlichungstag der Anmeldung: **28.03.2012**
(21) Anmeldenummer: 11182654.1
(22) Anmeldetag: 26.09.2011
(51) Int. Cl.: B23F 1/06, B23F 17/00

(54) **Fräsmaschine zur Herstellung von Zahnrädern**

(30) Priorität: 27.09.2010 DE 102010041481
(71) Anmelder: MAG IAS GmbH, 73033 Göppingen (DE)
(72) Erfinder: Bender, Günter, 65232 Tanusstein - Hahn (DE); Göbel, Uwe, 65329 Hohenstein (DE); Horn, Wolfgang, 73035 Göppingen (DE)
(74) Vertreter: Rau, Schneck & Hübner

(57) **Zusammenfassung**

Eine Fräsmaschine (1) zur Herstellung von Zahnrädern weist eine Werkstückaufnahme (3) zur Aufnahme eines zu verzahnenden Werkstücks (10) auf, die relativ zu einem Maschinengestell (2) um eine Werkstück-Schwenkachse (16) verschwenkbar ist. Zur Herstellung der Verzahnung sind zwei Bearbeitungseinheiten (4, 5) mit zwei Werkzeugspindeln (49, 57) zur Aufnahme von Fräswerkzeugen (52, 61) vorgesehen. Eine erste Werkzeugspindel (49) ist relativ zu der Werkstückaufnahme (3) in mindestens zwei Richtungen linear verfahrbar und um eine Spindel-Schwenkachse (48) verschwenkbar, die parallel zu der Werkstück-Schwenkachse (16) verläuft. Eine zweite Werkzeugspindel (57) ist relativ zu der Werkstückaufnahme (3) in mindestens zwei Richtungen linear verfahrbar. Die Fräsmaschine (1) weist eine hohe Fertigungsproduktivität sowie -flexibilität auf und ermöglicht insbesondere auch die Herstellung von Verzahnungen mit einer ungeraden Anzahl an Zähnen.

## Beschreibung

Die Erfindung betrifft eine Fräsmaschine zur Herstellung von Zahnrädern.

Fräsmaschinen zur Herstellung von Zahnrädern sind grundsätzlich bekannt. Nachteilig bei diesen Fräsmaschinen ist, dass deren Fertigungsproduktivität und -flexibilität begrenzt ist und insbesondere auf Kundenseite als unzureichend empfunden wird.

Aus der DE 43 28 801 A 1 ist eine modular aufgebaute Fräsmaschine für die spanabhebende Bearbeitung von Zahnrädern bekannt. Auf einem Maschinenuntergestell sind eine Werkstückspindel mit einer vertikalen Drehachse und drei Bearbeitungseinheiten angeordnet. Die Bearbeitungseinheiten sind derart ausgebildet, dass als Fräswerkzeuge Schlagmesser zum Einsatz kommen müssen.

Der Erfindung liegt die Aufgabe zugrunde, eine Fräsmaschine zur Herstellung von Zahnrädern zu schaffen, die auf einfache Weise eine hohe Fertigungsproduktivität und -flexibilität aufweist.

Diese Aufgabe wird durch eine Fräsmaschine mit den Merkmalen des Anspruchs 1 gelöst. Die erfindungsgemäße Fräsmaschine weist zwei Bearbeitungseinheiten auf, die relativ zu der Werkstückaufnahme im Wesentlichen gegenüberliegend angeordnet sind und das zu verzahnende Werkstück gleichzeitig bearbeiten. Die Werkzeug spindeln der Bearbeitungseinheiten sind relativ zu der Werkstückaufnahme jeweils in mindestens zwei Richtungen linear verfahrbar, so dass für jede der Werkzeugspindeln mindestens zwei Linearachsen bereitstehen, die zur Zustellung der Fräswerkzeuge und zur Verzahnung des Werkstücks dienen. Durch die zwei Bearbeitungseinheiten wird eine hohe Fertigungsproduktivität der Fräsmaschinegewährleistet. Die Werkzeugspindel der ersten Bearbeitungseinheit ist zusätzlich um eine erste Spindel-Schwenkachse verschwenkbar, die parallel zu der Werkstück-Schwenkachse der Werkstückaufnahme verläuft. Die erste Spindel-Schwenkachse ist relativ zu der Werkstück-Schwenkachse unverschwenkbar. Vorzugsweise weist ausschließlich die erste Bearbeitungseinheit die erste Spindel-Schwenkachse auf. Die zweite Bearbeitungseinheit oder weitere Bearbeitungseinheiten weisen vorzugsweise keine entsprechende Spindel-Schwenkachse auf. Hierdurch bleibt der Aufbau der Fräsmaschine einfach. Durch die erste Spindel-Schwenkachse können sowohl Zahnräder mit einer geraden Anzahl an Zähnen als auch Zahnräder mit einer ungeraden Anzahl an Zähnen hergestellt werden, wodurch eine hohe Fertigungsflexibilität bereitgestellt wird. Zur Herstellung von Zahnrädern mit einer ungeraden Anzahl an Zähnen wird die Werkzeugspindel um die erste Spindel-Schwenkachse verschwenkt, so dass das zu verzahnende Werkstück gleichzeitig mittels beiden Werkzeugspindeln bzw. Bearbeitungseinheiten bearbeitbar ist. Die Fräsmaschine ermöglicht insbesondere auch die Herstellung von schräg verlaufenden Verzahnungen, indem das Werkstück während der Bearbeitung um die Werkstück-Schwenkachse verschwenkt und die Werkzeugspindeln entsprechend synchron linear verfahren werden. Weiterhin ermöglicht die Fräsmaschine die Herstellung von Verzahnungen mit geraden oder gewölbten Zahnflanken. Dadurch, dass die erfindungsgemäße Fräsmaschine insgesamt mindestens vier Linearachsen und zwei Schwenkachsen aufweist, ist eine hohe Fertigungsproduktivität und -flexibilität gegeben, da unterschiedlichste Verzahnungen mit zwei Bearbeitungseinheiten gleichzeitig herstellbar sind. Die Fräsmaschine ist vorzugsweise als Vertikel-Fräsmaschine ausgebildet. Vorzugsweise ist die Fräsmaschine eine Dreh- und Fräsmaschine, mittels der eine Dreh- und Fräsbearbeitung des Werkstückes ermöglicht wird. Insbesondere ist die Fräsmaschine als Vertikal-Drehmaschine und -Fräsmaschine ausgebildet. Die Fräswerkzeuge sind vorzugsweise als Stirn- und/oder Umfangsfräser ausgebildet.

Eine Fräsmaschine nach Anspruch 2 ermöglicht auf einfache Weise die Herstellung von Zahnrädern mit einer ungeraden Anzahl von Zähnen. Dadurch, dass die erste Werkzeugspindel um die erste Spindel-Schwenkachse verschwenkbar ist, schließen die Spindel-Drehachsen der Werkzeugspindeln einen Winkel α ein, der ungleich 180 ° ist. Hierdurch kann das Werkstück zur Herstellung der Verzahnung mit beiden Werkzeugspindeln gleichzeitig bearbeitet werden. Durch die Verschwenkbarkeit der ersten Werkzeugspindel um die erste Spindel-Schwenkachse und die entsprechende Positionierung der Spindel-Drehachsen wird somit gewährleistet, dass die Fräswerkzeuge relativ zu dem zu bearbeitenden Werkstück positionierbar sind, so dass mittels beider Werkzeugspindeln gleichzeitig eine Zahnlücke einer Verzahnung mit ungerader Anzahl an Zähnen herstellbar ist.

Eine Fräsmaschine nach Anspruch 3 gewährleistet eine einfache und genaue Herstellung der Verzahnung, da beide Spindel-Drehachsen eine einander entsprechende Ausrichtung zu der Werkstück-Schwenkachse haben.

Eine Fräsmaschine nach Anspruch 4 erhöht die Fertigungsproduktivität und -flexibilität. Dadurch, dass beide Werkzeugspindeln relativ zu der Werkstückaufnahme jeweils in mindestens drei Richtungen linear verfahrbar sind, können beispielsweise Zahnräder mit unterschiedlichen Durchmessern einfach hergestellt werden. Durch die insgesamt sechs Linearachsen wird die Zustellung der Fräswerkzeuge und die Bearbeitung der Werkstücke vereinfacht, da zusätzliche Verfahrmöglichkeiten zur Verfügung stehen.

Eine Fräsmaschine nach Anspruch 5 erhöht die Fertigungsproduktivität und -flexibilität, da verschiedenste Bearbeitungsschritte, wie beispielsweise Schleifen, Bohren bzw. Gewindebohren, Fräsen, Vordrehen oder Fertigdrehen, durch ein flexibles Anstellen der entsprechenden Werkzeuge möglich sind. Die erfindungsgemäße Fräsmaschine weist somit vorzugsweise insgesamt sechs Linearachsen und vier Schwenkachsen auf, wodurch eine äußerst hohe Fertigungsproduktivität und -flexibiltät erzielt wird.

Eine Fräsmaschine nach Anspruch 6 oder 7 ermöglicht auf einfache Weise die Ausbildung von zwei x-Linearachsen. Vorzugsweise sind die Bearbeitungseinheiten an gemeinsamen x-Führungsschienen gelagert, die an einem gemeinsamen ständerförmigen Gestellabschnitt angeordnet sind.

Eine Fräsmaschine nach Anspruch 8 ermöglicht auf einfache Weise die Ausbildung von zwei z-Linearachsen.

Eine Fräsmaschine nach Anspruch 9 oder 10 ermöglicht auf einfache Weise die Ausbildung von zwei y-Linearachsen.

Eine Fräsmaschine nach Anspruch 11 ermöglicht auf einfache Weise eine lineare Verfahrbarkeit der jeweiligen Werkzeugspindel entlang der zugehörigen x-, y- und z-Linearachse.

Eine Fräsmaschine nach Anspruch 12 ermöglicht auf einfache Weise die Ausbildung einer jeweiligen b-Schwenkachse.

Eine Fräsmaschine nach Anspruch 13 ermöglicht auf einfache Weise die Ausbildung einer c-Schwenkachse der ersten Werkzeugspindel.

Eine Fräsmaschine nach Anspruch 14 gewährleistet eine hohe Fertigungsgenauigkeit, da die c-Schwenkachse der Werkstückaufnahme bzw. die Werkzeug-Schwenkachse im Wesentlichen spielfrei ist.

Eine Fräsmaschine nach Anspruch 15 gewährleistet eine hohe Fertigungsproduktivität. Dadurch, dass die erste Spindel-Schwenkachse von der Werkstück-Schwenkachse in radialer Richtung beabstandet ist, müssen zum Verschwenken der Werkzeugspindel der ersten Bearbeitungseinheit nur geringe Massen entlang kurzer Wege verschwenkt werden. Dies gewährleistet eine hohe Bearbeitungsgeschwindigkeit und geringe Nebenzeiten, wodurch eine hohe Fertigungsproduktivität gewährleistet wird.

Weitere Merkmale, Vorteile und Einzelheiten der Erfindung ergeben sich aus der nachfolgenden Beschreibung eines Ausführungsbeispiels. Es zeigen:

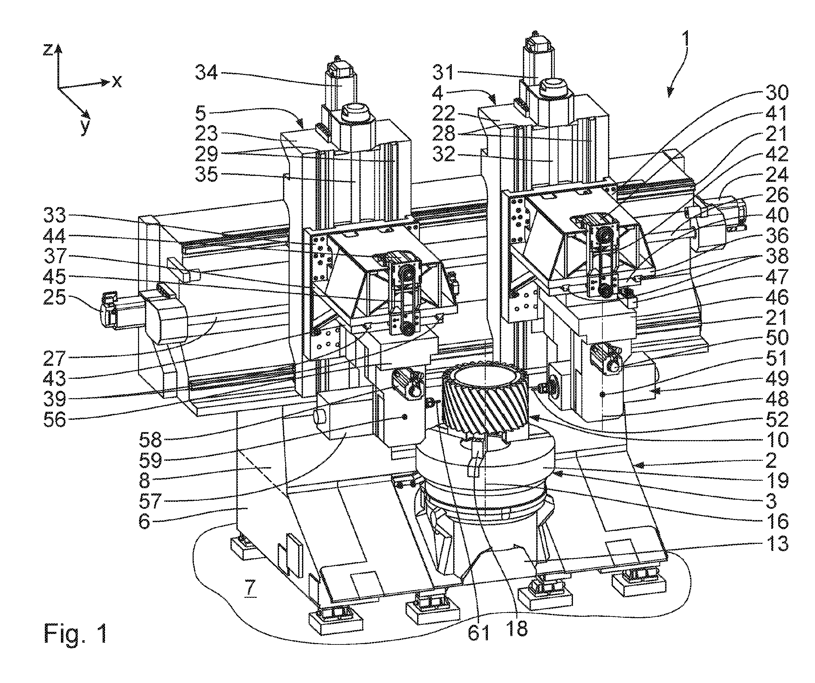

- Fig. 1: eine perspektivische Ansicht einer Fräsmaschine zur Herstellung von Zahnrädern mit zwei Bearbeitungseinheiten,

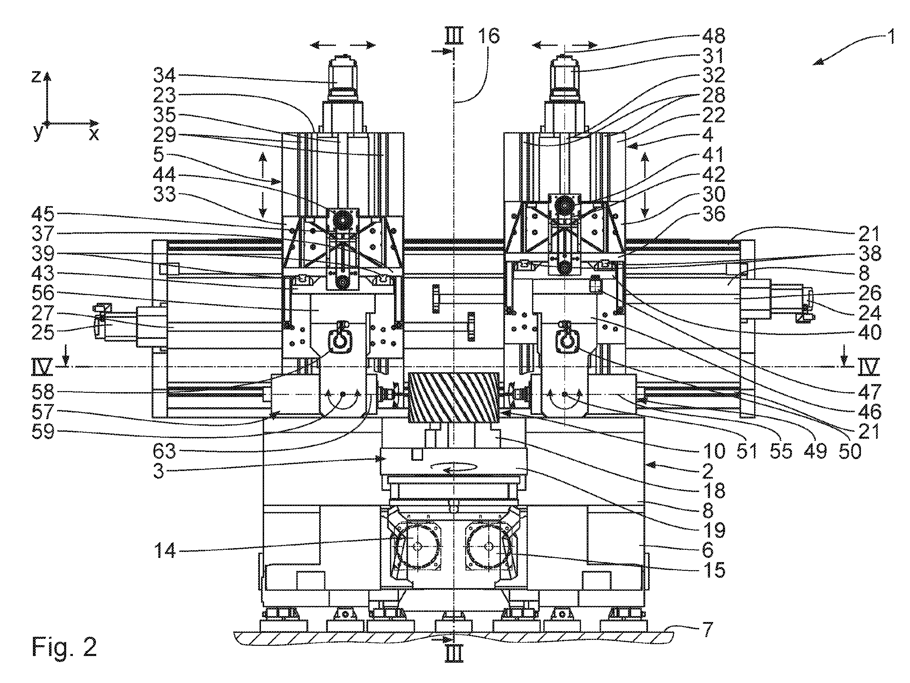

- Fig. 2: eine Frontansicht der Fräsmaschine in Fig. 1,

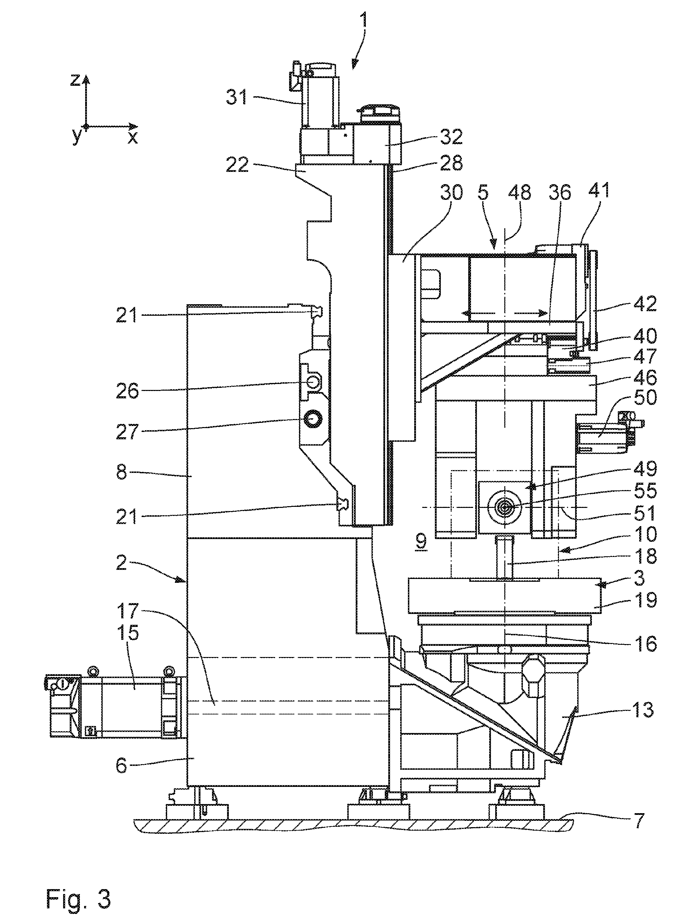

- Fig. 3: einen Vertikalschnitt durch die Fräsmaschine in Fig. 2 entlang der Schnittlinie III-III, und

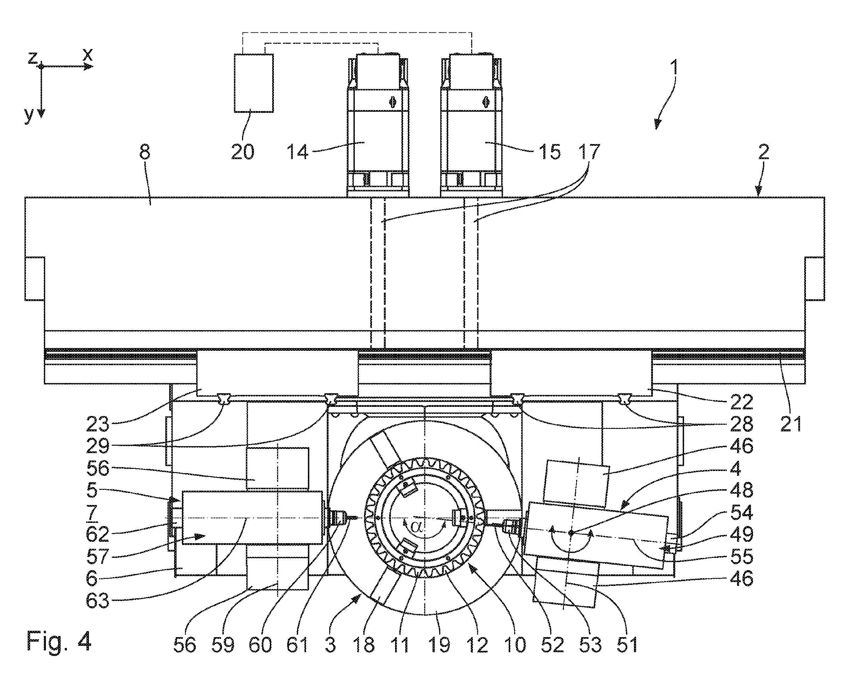

- Fig. 4: einen Horizontalschnitt durch die Fräsmaschine in Fig. 2 entlang der Schnittlinie IV-IV.

Eine Fräsmaschine 1 weist zur Herstellung von Zahnrädern ein Maschinengestell 2 auf, an dem eine Werkstückaufnahme 3 und zwei Bearbeitungseinheiten 4, 5 angeordnet sind.

Die Fräsmaschine 1 ist als Vertikal-Drehmaschine und -Fräsmaschine ausgebildet. Das Maschinengestell 2 ist ständerartig ausgebildet und hat im Querschnitt im Wesentlichen die Form eines L. Ein erster Gestellabschnitt 6 erstreckt sich im Wesentlichen in einer horizontalen x- und einer horizontalen y-Richtung und ist auf einer Fundamentplatte 7 befestigt. Endseitig an den ersten Gestellabschnitt 6 ist ein zweiter Gestellabschnitt 8 angeordnet, der sich im Wesentlichen in der horizontalen x-Richtung und einer vertikalen z-Richtung erstreckt. Die Gestellabschnitte 6, 8 begrenzen einen Arbeitsraum 9, in dem zu verzahnende Werkstücke 10 zu Zahnrädern mit Zähnen 11 und dazwischen liegenden Zahnlücken 12 bearbeitet werden. Die x-, y- und z-Richtung verlaufen jeweils senkrecht zueinander und bilden ein kartesisches Koordinatensystem.

Der erste Gestellabschnitt 6 verläuft ausgehend von dem zweiten Gestellabschnitt 8 in Richtung seines freien Endes spitz zu. An dem ersten Gestellabschnitt 6 ist in der x-Richtung mittig ein Sockel 13 befestigt, auf dem die Werkstückaufnahme 3 angeordnet ist. Die Werkstückaufnahme 3 ist mittels zwei ersten c-Antriebsmotoren 14, 15 um eine Werkstück-Schwenkachse 16 verschwenkbar. Die Werkstück-Schwenkachse 16 verläuft parallel zu der z-Richtung und wird nachfolgend auch als erste c-Schwenkachse bezeichnet. Die c-Antriebmotoren 14, 15 sind an einer dem Arbeitsraum 9 abgewandten Seite des ersten Gestellabschnitts 6 angeordnet und mit der Werkstückaufnahme 3 über eine lediglich angedeutete Übertragungsmechanik 17 verbunden. Die Werkstückaufnahme 3 ist als Drehteller ausgebildet und weist mehrere Spannklammern 18 auf, die zum Auf spannen von hohlzylinderförmigen Werkstücken 10 auf einer ringförmigen Platte 19 angeordnet und radial zu der Werkstück-Schwenkachse 16 verlagerbar sind. Die c-Antriebsmotoren 14, 15 werden mittels einer Steuereinrichtung 20 im Master-Slave-Modus betrieben, so dass die Werkstückaufnahme 3 im Wesentlichen spielfrei um die Werkstück-Schwenkachse 16 verschwenkbar ist. Die Werkstückaufnahme 3 ist vorzugsweise um 360 ° um die Werkstück-Schwenkachse 16 verschwenkbar, also um diese vollständig drehbar.

An dem zweiten Gestellabschnitt 8 sind x-Führungsschienen 21 angeordnet, die in der z-Richtung beabstandet voneinander sind und parallel zu der x-Richtung verlaufen. Die Bearbeitungseinheiten 4, 5 weisen jeweils einen x-Schlitten 22, 23 auf, der auf den x-Führungsschienen 21 angeordnet und mittels eines zugehörigen x-Antriebsmotors 24, 25 über eine x-Antriebsspindel 26, 27 in der x-Richtung linear verfahrbar sind. Die x-Schlitten 22, 23 stellen somit zwei x-Linearachsen bereit.

An den x-Schlitten 22, 23 sind jeweils zwei z-Führungsschienen 28, 29 angeordnet, die in der x-Richtung voneinander beabstandet sind und parallel zu der z-Richtung verlaufen. Auf den z-Führungsschienen 28 ist ein z-Schlitten 30 angeordnet, der mittels eines zugehörigen z-Antriebsmotors 31 über eine z-Antriebsspindel 32 in der z-Richtung linear verfahrbar ist. Entsprechend ist auf den z-Führungsschienen 29 ein z-Schlitten 33 angeordnet, der mittels eines z-Antriebsmotors 34 über eine z-Antriebsspindel 35 in der z-Richtung linear verfahrbar ist. Die z-Schlitten 30, 33 bilden somit zwei z-Linearachsen aus.

An den z-Schlitten 30, 33 ist jeweils ein Tragteil 36, 37 angeordnet, das in der y-Richtung gegenüber dem zugehörigen z-Schlitten 30, 33 vorspringt. An der Unterseite des jeweiligen Tragteils 36, 37 sind y-Führungsschienen 38, 39 angeordnet, die in der x-Richtung zueinander beabstandet sind und parallel zu der y-Richtung verlaufen. Auf den y-Führungsschienen 38 ist hängend ein y-Schlitten 40 angeordnet, der mittels eines y-Antriebsmotors 41 über einen Riemenantrieb 42 in der y-Richtung linear verfahrbar ist. Entsprechend ist auf den y-Führungsschienen 39 ein y-Schlitten 43 hängend angeordnet, der mittels eines y-Antriebsmotors 44 über einen Riemenantrieb 45 in der y-Richtung linear verfahrbar ist. Die y-Antriebsmotoren 41, 44 sind auf einer Oberseite des jeweiligen Traggestells 36, 37 angeordnet und mit dem jeweiligen y-Schlitten 40, 43 verfahrbar. Die y-Schlitten 40, 43 bilden somit zwei y-Linearachsen aus.

An dem y-Schlitten 40 der ersten Bearbeitungseinheit 4 ist ein erster Spindelhalter 46 angeordnet, der mittels eines zweiten c-Antriebsmotors 47 um eine erste Spindel-Schwenkachse 48 verschwenkbar ist. Die erste Spindel-Schwenkachse 48 verläuft parallel zu der z-Richtung und wird nachfolgend auch als zweite c-Schwenkachse bezeichnet. Die erste Spindel-Schwenkachse 48 ist in radialer Richtung bzw. horizontaler Richtung zu der Werkstück-Schwenkachse 16 beabstandet. Die erste Spindel-Schwenkachse 38 ist relativ zu der Werkstück-Schwenkachse 16 unverschwenkbar. Der Spindelhalter 46 ist gabelförmig ausgebildet. Zwischen den gabelförmigen Enden des Spindelhalters 46 ist eine erste Werkzeugspindel 49 angeordnet. Die Werkzeugspindel 49 ist mittels eines b-Antriebsmotors 50 um eine zweite Spindel-Schwenkachse 51 verschwenkbar, die horizontal und senkrecht zu der ersten Spindel-Schwenkachse 48 verläuft. Die zweite Spindel-Schwenkachse 51 wird nachfolgend auch als b-Schwenkachse bezeichnet, da diese im Wesentlichen parallel zu der y-Richtung verläuft.

Zum Drehantreiben eines Fräswerkzeuges 52 weist die erste Werkzeugspindel 49 eine erste Werkzeugaufnahme 53 auf, die mittels eines ersten Spindel-Antriebsmotors 54 um eine erste Spindel-Drehachse 55 drehantreibbar ist.

Die zweite Bearbeitungseinheit 5 weist einen zweiten gabelförmigen Spindelhalter 56 auf, der im Unterschied zu der ersten Bearbeitungseinheit 4 fest an dem y-Schlitten 43 angeordnet ist. Die zweite Bearbeitungseinheit 5 weist also keine Spindel-Schwenkachse auf, die der ersten Spindel-Schwenkachse 48 entspricht. Ausschließlich die erste Bearbeitungseinheit 4 weist die erste Spindel-Schwenkachse 48 auf. Zwischen den gabelförmigen Enden des Spindelhalters 56 ist eine zweite Werkzeugspindel 57 angeordnet, die mittels eines zweiten b-Antriebsmotors 58 um eine parallel zu der y-Richtung verlaufende zweite Spindel-Schwenkachse 59 verschwenkbar ist. Die zweite Spindel-Schwenkachse 59 wird nachfolgend auch als b-Schwenkachse bezeichnet. Entsprechend zu der ersten Werkzeugspindel 49 weist die zweite Werkzeugspindel 57 eine zweite Werkzeugaufnahme 60 für ein Fräswerkzeug 61 auf, die mittels eines zweiten Spindel-Antriebsmotors 62 um eine zweite Spindel-Drehachse 63 drehantreibbar ist. Die zweite Spindel-Drehachse 63 verläuft parallel zu der x-Richtung.

Die Werkzeugspindeln 49, 57 sind somit relativ zu der Werkstückaufnahme 3 jeweils in drei Richtungen linear verfahrbar, nämlich entlang ihrer jeweiligen x-, y- und z-Linearachse. Zusätzlich sind beide Werkzeugspindeln 49, 57 um ihre jeweilige b-Schwenkachse 51, 59 verschwenkbar. Die b-Schwenkachsen 51, 59 verlaufen senkrecht zu der Werkstück-Schwenkachse bzw. der ersten c-Schwenkachse 16. Zusätzlich ist die Werkstückaufnahme 3 um die erste c-Schwenkachse 16 und die erste Werkzeugspindel 49 um die zweite c-Schwenkachse 48 verschwenkbar. Die Fräsmaschine 1 hat somit insgesamt sechs Linearachsen und vier Schwenkachsen. Vorzugsweise hat die Fräsmaschine 1 keine weiteren Linearachsen und/oder Schwenkachsen.

Zur Verzahnung eines Werkstückes 10 wird dieses zunächst auf die Werkstückaufnahme 3 aufgespannt. Anschließend werden die Werkzeugspindeln 49, 57 derart um ihre b-Schwenkachsen 51, 59 verschwenkt, dass die Spindel-Drehachsen 55, 63 senkrecht zu der Werkstück-Schwenkachse 16 verlaufen. Zur Herstellung einer Verzahnung mit einer ungeraden Anzahl an Zähnen 11 wird zusätzlich die erste Werkzeugspindel 49 um die zweite c-Schwenkachse 48 verschwenkt, so dass die Spindel-Drehachsen 55, 63 in der xy-Ebene einen Winkel α einschließen, der ungleich 180 ° ist. Der einzustellende Winkel α ergibt sich aus der Anzahl an Zähnen 11. Die Fräswerkzeuge 52, 61 werden anschließend so linear verfahren, dass diese radial zu dem Werkstück 10 zugestellt werden, wobei die Spindel-Drehachse 55 die Werkstück-Schwenkachse 16 schneidet.

Durch lineares Verfahren der drehangetriebenen Fräswerkzeuge 52, 61 und durch Verschwenken der Werkstückaufnahme 3 können geradlinig oder schräg verlaufende Zähne 11 mit geraden- oder gewölbten Zahnflanken hergestellt werden. Durch synchrones Verfahren der Fräswerkzeuge 52, 61 können am Werkstück 10 gleichzeitig zwei Zahnlücken 12 gefräst werden. Durch die zweite c-Schwenkachse 48 ist dies auch möglich, wenn die Verzahnung eine ungerade Anzahl an Zähnen 11 aufweisen soll. Dadurch, dass die c-Antriebsmotoren 14, 15 im Master-Slave-Modus betrieben werden, kann die Werkstückaufnahme 3 im Wesentlichen spielfrei um die Werkstück-Schwenkachse bzw. erste c-Schwenkachse 16 verschwenkt werden. Dadurch, dass die Werkzeugspindeln 49, 57 zusätzlich um ihre b-Schwenkachsen 51, 59 verschwenkbar sind, können verschiedenste Bearbeitungsschritte, wie Schleifen, Bohren bzw. Gewindebohren, Fräsen, Vordrehen oder Fertigdrehen flexibel erfolgen. Zusätzlich kann durch die zwei Bearbeitungseinheiten ein automatischer Werkstückwechsel erfolgen.

Die Fräsmaschine 1 weist somit eine hohe Fertigungsproduktivität und - flexibilität sowie eine hohe Fertigungsgenauigkeit auf.

## Patentansprüche

1. Fräsmaschine zur Herstellung von Zahnrädern mit
- einem Maschinengestell (2),
- einer Werkstückaufnahme (3) zur Aufnahme eines zu verzahnenden Werkstückes (10), die
-- an dem Maschinengestell (2) angeordnet ist und
-- um eine Werkstück-Schwenkachse (16) verschwenkbar ist,
- einer ersten Bearbeitungseinheit (4) zur Herstellung einer Verzahnung (11, 12) an dem Werkstück (10), wobei
-- diese eine erste Werkzeugspindel (49) zur Aufnahme eines Fräswerkzeuges (52) aufweist,
-- die erste Werkzeugspindel (49) eine erste Werkzeugaufnahme (53) für das Fräswerkzeug (52) aufweist, die mittels eines ersten Spindel-Antriebsmotors (54) um eine erste Spindel-Drehachse (55) drehantreibbar ist, wobei die Spindel-Drehachse (55) zur Herstellung der Verzahnung (11, 12) senkrecht zu der Werkstück-Schwenkachse (16) positionierbar ist und die Werkstück-Schwenkachse (16) schneidet,
-- die erste Werkzeugspindel (49) relativ zu der Werkstückaufnahme (3) in mindestens zwei Richtungen linear verfahrbar ist, und
-- die erste Werkzeugspindel (49) um eine erste Spindel-Schwenkachse (48) verschwenkbar ist, die parallel zu der Werkstück-Schwenkachse (16) verläuft,
- einer zweiten Bearbeitungseinheit (5) zur Herstellung der Verzahnung (11, 12) an dem Werkstück (10), wobei
-- diese eine zweite Werkzeugspindel (57) zur Aufnahme eines Fräswerkzeuges (61) aufweist, und
-- die zweite Werkzeugspindel (57) eine zweite Werkzeugaufnahme (60) für das Fräswerkzeug (61) aufweist, die mittels eines zweiten Spindel-Antriebsmotors (62) um eine zweite Spindel-Drehachse (63) drehantreibbar ist, wobei die Spindel-Drehachse (63) zur Herstellung der Verzahnung (11, 12) senkrecht zu der Werkstück-Schwenkachse (16) positionierbar ist und die Werkstück-Schwenkachse (16) schneidet,
-- die zweite Werkzeugspindel (57) relativ zu der Werkstückaufnahme (3) in mindestens zwei Richtungen linear verfahrbar ist.

2. Fräsmaschine nach Anspruch 1, **dadurch gekennzeichnet, dass** die Spindel-Drehachsen (55, 63) zur Herstellung der Verzahnung (11, 12) einen Winkel α einschließen, der ungleich 180° ist, wobei der Winkel α insbesondere in einer horizontalen Ebene liegt.

3. Fräsmaschine nach Anspruch 1 oder 2, **dadurch gekennzeichnet, dass** die Werkstück-Schwenkachse (16) in einer vertikalen z-Richtung verläuft.

4. Fräsmaschine nach einem der Ansprüche 1 bis 3, **dadurch gekennzeichnet, dass**
die Werkzeugspindeln (49, 57) relativ zu der Werkstückaufnahme (3) jeweils in mindestens drei Richtungen linear verfahrbar sind.

5. Fräsmaschine nach einem der Ansprüche 1 bis 4, **dadurch gekennzeichnet, dass**
mindestens eine der Werkzeugspindeln (49, 57), insbesondere jede der Werkzeugspindeln (49, 57), um eine zweite Spindel-Schwenkachse (51, 59) verschwenkbar ist, die senkrecht zu der Werkstück-Schwenkachse (16) verläuft.

6. Fräsmaschine nach einem der Ansprüche 1 bis 5, **dadurch gekennzeichnet, dass**
- an dem Maschinengestell (2) in einer horizontalen x-Richtung verlaufende x-Führungsschienen (21) angeordnet sind, und
- die Bearbeitungseinheiten (4, 5) mittels eines jeweiligen x-Antriebsmotors (24, 25) in der x-Richtung linear verfahrbar sind.

7. Fräsmaschine nach Anspruch 6, **dadurch gekennzeichnet, dass** das Maschinengestell (2) ständerartig ausgebildet ist und die x-Führungsschienen (21) in einer vertikalen z-Richtung voneinander beabstandet an dem Maschinengestell (2) angeordnet sind.

8. Fräsmaschine nach Anspruch 6 oder 7, **dadurch gekennzeichnet, dass** jede der Bearbeitungseinheiten (4, 5) umfasst:
- einen auf den x-Führungsschienen (21) verfahrbaren x-Schlitten (22, 23),
- an dem x-Schlitten (22, 23) angeordnete und in einer vertikalen z-Richtung verlaufende z-Führungsschienen (28, 29), und
- einen auf den z-Führungsschienen (28, 29) mittels eines z-Antriebsmotors (31, 34) linear verfahrbaren z-Schlitten (30, 33).

9. Fräsmaschine nach Anspruch 8, **dadurch gekennzeichnet, dass** jede der Bearbeitungseinheiten (4, 5) umfasst:
- ein an dem z-Schlitten (30, 33) angeordnetes und in einer horizontalen y-Richtung vorspringendes Tragteil (36, 37),
- an dem Tragteil (36, 37) angeordnete und in der y-Richtung verlaufende y-Führungsschienen (38, 39), und
- einen auf den y-Führungsschienen (38, 39) mittels eines y-Antriebsmotors (41, 44) linear verfahrbaren y-Schlitten (40, 43).

10. Fräsmaschine nach Anspruch 9, **dadurch gekennzeichnet, dass** die y-Führungsschienen (38, 39) in der x-Richtung voneinander beabstandet sind und der jeweilige y-Schlitten (40, 43) hängend an dem zugehörigen Tragteil (36, 37) angeordnet ist.

11. Fräsmaschine nach Anspruch 9 oder 10, d**adurch gekennzeichnet, dass**
die Werkzeugspindeln (49, 57) an dem jeweiligen y-Schlitten (40, 43) angeordnet sind und insbesondere die Spindel-Drehachse (63) der zweiten Werkzeugspindeln (57) parallel zu der x-Richtung angeordnet ist.

12. Fräsmaschine nach einem der Ansprüche 9 bis 11, **dadurch gekennzeichnet, dass**
mindestens eine der Werkzeugspindeln (49, 57), insbesondere jede der Werkzeugspindeln (49, 57), mittels eines Spindelhalters (46, 56) an dem zugehörigen y-Schlitten (40, 43) angeordnet ist, wobei die mindestens eine Werkzeugspindel (49, 57) mittels eines b-Antriebsmotors (50, 58) um die zweite Spindel-Schwenkachse (51, 59) verschwenkbar ist.

13. Fräsmaschine nach einem der Ansprüche 9 bis 12, **dadurch gekennzeichnet, dass**
die erste Werkzeugspindeln (49) mittels eines c-Antriebsmotors (47) um die erste Spindel-Schwenkachse (48) verschwenkbar an dem zugehörigen y-Schlitten (40) angeordnet ist.

14. Fräsmaschine nach einem der Ansprüche 1 bis 13, **dadurch gekennzeichnet, dass**
die Werkstückaufnahme (3) mittels zwei c-Antriebsmotoren (14, 15) spielfrei um die Werkstück-Schwenkachse (16) verschwenkbar ist.

15. Fräsmaschine nach einem der Ansprüche 1 bis 14, **dadurch gekennzeichnet, dass**
die erste Spindel-Schwenkachse (48) beabstandet zu der Werkstück-Schwenkachse (16) verläuft.
